# EUROPEAN PATENT APPLICATION

(11) **EP 4 852 537 A1**
(43) Date of publication of application: **09.12.2026**
(21) Application number: 24920902.4
(22) Date of filing: 31.01.2024
(51) Int. Cl.: H04W 52/14

(54) **POWER CONTROL METHOD AND APPARATUS**

(71) Applicant: 1FINITY INC., Kawasaki-shi, Kanagawa 211-8588 (JP)
(72) Inventor: WANG, Guotong, Beijing 100022 (CN); WANG, Xin, Beijing 100022 (CN); JIANG, Qinyan, Beijing 100022 (CN); JIA, Meiyi, Beijing 100022 (CN); ZHANG, Jian, Beijing 100022 (CN); JIN, Liqiang, Beijing 100022 (CN); ZHANG, Qun, Beijing 100022 (CN); ZHAO, Di, Beijing 100022 (CN); LU, Yiwen, Beijing 100022 (CN)
(74) Representative: Haseltine Lake Kempner LLP
(86) International application number: PCT/CN2024/075054
(87) International publication number: WO 2025/160832

(57) **Abstract**

Embodiments of the present disclosure provide a power control methd and apparatus, the method comprising that: a terminal equipment receives configuration information of an uplink transmission; wherein a terminal equipment performs a first uplink transmission and a first downlink transmission with a first transmission reception point (TRP), and/or, performs a second uplink transmission with a second transmission reception point (TRP); and the terminal equipment calculates power of the second uplink transmission according to a pathloss estimation offset factor.

## Description

### TECHNICAL FIELD

Embodiments of the present disclosure relate to the technical field of communications.

### BACKGROUND

In NR, a multi-transmission reception point (TRP) operation has been supported, including uplink and downlink transmissions. A terminal equipment may maintain communication links with a plurality of TRPs. For an uplink transmission, power control is generally applied. A terminal equipment may estimate a path loss between the terminal equipment and a network device (e.g., TRP or gNB) based on a downlink pathloss reference signal. The terminal equipment may calculate (or determine) an uplink transmission power according to an estimated path loss and some parameters.

It should be noted that the above introduction to the technical background is just to facilitate a clear and complete description of technical solutions of the present disclosure, and is elaborated to facilitate understanding of those skilled in the art. It cannot be considered that the technical solutions are known by those skilled in the art just because these solutions are elaborated in Background of the present disclosure.

### SUMMARY

However, the inventors found that an asymmetric downlink/uplink transmission reception point (asymmetric DL single TRP/UL multi-TRP) operation will be introduced in Release-19. However, currently there is no specific scheme for how to specifically perform power control, and uplink power control needs to be enhanced.

For at least one of the above problems, embodiments of the present disclosure provide a power control method and apparatus.

According to one aspect of embodiments of the present disclosure, a power control method is provided, including that:
a terminal equipment receives configuration information of an uplink transmission; wherein the terminal equipment performs a first uplink transmission and a first downlink transmission with a first transmission reception point (TRP), and/or, performs a second uplink transmission with a second transmission reception point (TRP); and
the terminal equipment calculates power of the second uplink transmission according to a pathloss estimation offset factor.

According to another aspect of embodiments of the present disclosure, a power control apparatus is provided, including:
a receiving unit configured to receive configuration information of an uplink transmission; wherein a terminal equipment performs a first uplink transmission and a first downlink transmission with a first transmission reception point (TRP), and/or, performs a second uplink transmission with a second transmission reception point (TRP); and
a processing unit configured to calculate power of the second uplink transmission according to a pathloss estimation offset factor.

According to another aspect of embodiments of the present disclosure, a power control method is provided, including that:
a network device transmits configuration information of an uplink transmission; wherein a terminal equipment performs a first uplink transmission and a first downlink transmission with a first transmission reception point (TRP), and/or, performs a second uplink transmission with a second transmission reception point (TRP); and the terminal equipment calculates power of the second uplink transmission according to a pathloss estimation offset factor.

According to another aspect of embodiments of the present disclosure, a power control apparatus is provided, including:
a transmitting unit configured to transmit configuration information of an uplink transmission; wherein a terminal equipment performs a first uplink transmission and a first downlink transmission with a first transmission reception point (TRP), and/or, performs a second uplink transmission with a second transmission reception point (TRP); and the terminal equipment calculates power of the second uplink transmission according to a pathloss estimation offset factor.

According to a further aspect of embodiments of the present disclosure, a communication system is provided, including:
a network device configured to transmit configuration information of an uplink transmission; and
a terminal equipment configured to perform a first uplink transmission and a first downlink transmission with a first transmission reception point (TRP), and/or, perform a second uplink transmission with a second transmission reception point (TRP); and the terminal equipment calculates power of the second uplink transmission according to a pathloss estimation offset factor.

One of advantageous effects of embodiments of the present disclosure lies in that a terminal equipment calculates power of a second uplink transmission according to a pathloss estimation offset factor. Therefore, even in an asymmetric uplink/downlink TRP operation scenario, appropriate power control is able to be performed, which may improve accuracy and reliability of an uplink transmission.

Referring to later descriptions and drawings, specific implementations of the present disclosure are disclosed in detail, indicating modes in which principles of the present disclosure may be adopted. It should be understood that implementations of the present disclosure are not limited in scope thereby. Within spirits and scopes of terms of attached claims, implementations of the present disclosure include many changes, modifications, and equivalents.

Feature(s) described and/or shown for one implementation may be used in one or more other implementations in the same way or in a similar way, and may be combined with or replace feature(s) in other implementations.

It should be emphasized that term "include/including/comprise/comprising" when being used herein refers to presence of a feature, a whole piece, a step, or a component, but does not exclude presence or addition of one or more other features, whole pieces, steps, or components.

### BRIEF DESCRIPTION OF DRAWINGS

Element(s) and feature(s) described in one drawing or one implementation of embodiments of the present disclosure may be combined with element(s) and feature(s) shown in one or more other drawings or implementations. In addition, in the drawings, similar reference signs denote corresponding components in several drawings, and may be used to indicate corresponding components used in more than one implementation.
FIG. 1 is a schematic diagram of a communication system in embodiments of the present disclosure;
FIG. 2 is a schematic diagram of a multi-TRP scenario in embodiments of the present disclosure;
FIG. 3 is a schematic diagram of a power control method in embodiments of the present disclosure;
FIG. 4 is a schematic diagram of a scenario of an asymmetric uplink/downlink TRP operation in embodiments of the present disclosure;
FIG. 5 is an example diagram of calculating a pathloss estimation offset factor in embodiments of the present disclosure;
FIG. 6 is a schematic diagram of a power control method in embodiments of the present disclosure;
FIG. 7 is a schematic diagram of a power control apparatus in embodiments of the present disclosure;
FIG. 8 is a schematic diagram of a power control apparatus in embodiments of the present disclosure;
FIG. 9 is a schematic diagram of a terminal equipment in embodiments of the present disclosure;
FIG. 10 is a schematic diagram of a network device in embodiments of the present disclosure.

### DETAILED DESCRIPTION

Referring to the drawings, through the following specification, the aforementioned and other features in the present disclosure will become obvious. The specification and the drawings specifically disclose specific implementations of the present disclosure, indicating partial implementations in which principles of the present disclosure may be adopted. It should be understood that the present disclosure is not limited to described implementations, on the contrary, the present disclosure includes all modifications, variations and equivalents falling within scopes of attached claims.

In the embodiments of the present disclosure, terms "first" and "second", etc. are used to distinguish different elements in terms of appellation, but do not represent a spatial arrangement or time sequence, etc. of these elements, and these elements should not be limited by these terms. Term "and/or" includes any one of and all combinations of one or more of relevantly listed terms. Terms "contain", "include" and "have", etc. refer to presence of stated feature(s), element(s), component(s), or assembly/assemblies, but do not exclude presence or addition of one or more other features, elements, components, or assemblies.

In the embodiments of the present disclosure, singular forms "a/an" and "the", etc. include plural forms, and should be understood broadly as "a kind of" or "a type of", but are not defined as the meaning of "one", in addition, term "the" should be understood to include both singular forms and plural forms, unless a context clearly indicates otherwise. In addition, term "according to" should be understood as "at least partially according to......", and term "based on" should be understood as "at least partially based on......", unless a context clearly indicates otherwise.

In the embodiments of the present disclosure, term "communication network" or "wireless communication network" may refer to a network conforming to any of the following communication standards, such as Long Term Evolution (LTE), LTE-Advanced (LTE-A), Wideband Code Division Multiple Access (WCDMA), High-Speed Packet Access (HSPA) and so on.

And, communication between devices in a communication system may be performed according to a communication protocol of any stage, which e.g. may include but be not limited to the following communication protocols: 1G (generation), 2G, 2.5G, 2.75G, 3G, 4G, 4.5G, 5G, New Radio (NR) and so on, and/or other communication protocols that are currently known or will be developed in future.

In the embodiments of the present disclosure, term "network device" e.g. refers to a device configured to access a terminal equipment to a communication network in a communication system and provide services for the terminal equipment. A network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and moreover, may further include a Remote Radio Head (RRH), a Remote Radio Unit (RRU), a relay or a low power node (such as femeto, pico, etc.), an Integrated Access and Backhaul (IAB) node or an IAB-DU or an IAB-donor. And term "base station" may include some or all functions thereof, and each base station may provide communication coverage to a specific geographic region. Term "cell" may refer to a base station and/or a coverage area thereof, which depends on a context in which this term is used. Without causing confusion, terms "cell" and "base station" are interchangeable.

In the embodiments of the present disclosure, term "User Equipment (UE)" or "Terminal Equipment (TE) or Terminal Device" refers to e.g., a device configured to access a communication network and receive network services via a network device. A terminal equipment may be fixed or mobile, and may further be called Mobile Station (MS), a terminal, a Subscriber Station (SS), an Access Terminal (AT), an IAB-MT, a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under scenarios such as Internet of Things (IoT), the terminal equipment may further be a machine or an apparatus for performing monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, term "network side" or "network device side" refers to a side of a network, may be a certain base station, or may include one or more of the above network devices. Term "user side" or "terminal side" or "terminal equipment side" refers to a side of a user or terminal, may be a certain UE, or may include one or more of the above terminal equipments. Unless otherwise specified herein, "device" may refer to a network device, or may refer to a terminal equipment.

Scenarios of embodiments of the present disclosure are described below through examples, however the present disclosure is not limited thereto.

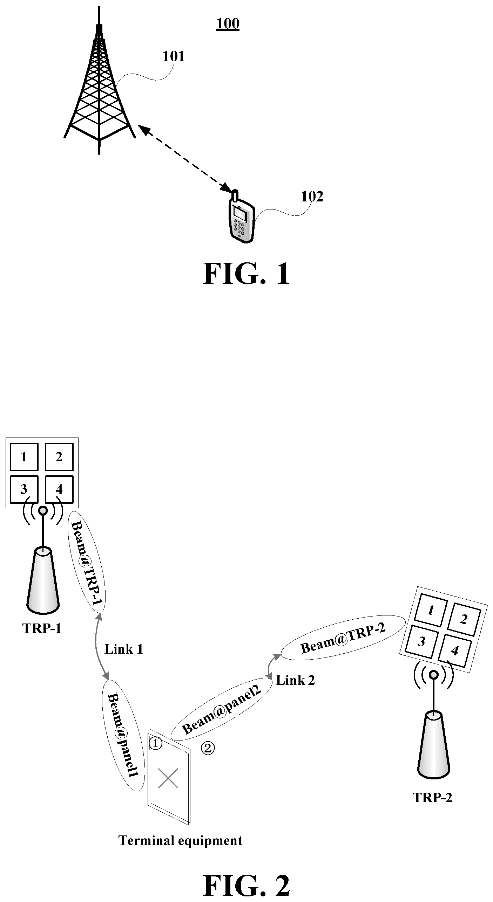

FIG. 1 is a schematic diagram of a communication system in the embodiments of the present disclosure, schematically describing a situation by taking a terminal equipment and a network device as an example, and as shown in FIG. 1, a communication system 100 may include a network device 101 and a terminal equipment 102. For simplicity, FIG. 1 only takes one terminal equipment and one network device as an example for description, however embodiments of the present disclosure are not limited thereto, for example there may be multiple terminal equipments.

In the embodiments of the present disclosure, transmission of existing or further implementable services may be performed between the network device 101 and the terminal equipment 102. For example, these services may include but be not limited to: enhanced Mobile Broadband (eMBB), massive Machine Type Communication (mMTC), Ultra-Reliable and Low-Latency Communication (URLLC) and so on.

FIG. 2 is a schematic diagram of a multi-TRP scenario in the embodiments of the present disclosure. A TRP may be a part of a network device (e.g., a gNB) that receives signals from a terminal equipment, or may be a part of a network device (e.g., a gNB) that transmits signals to a terminal equipment. Moreover, the TRP may further represent a set of downlink control information (DCI) or a set of reference signals, etc.

As shown in FIG. 2, in a scenario of a multi-TRP operation, a terminal equipment may have a panel-1 and a panel-2; one serving cell may schedule the terminal equipment from 2 TRPs, to provide better physical downlink share channel (PDSCH) coverage, reliability and/or data rates.

For a multi-TRP operation, there may be two different operation modes: single-DCI and multi-DCI. For these two modes, control of uplink and downlink operations is performed by a physical layer and a medium access control (MAC) layer. In a single-DCI mode, a terminal equipment is scheduled by two TRPs via the same DCI; and in a multi-DCI mode, a terminal equipment is scheduled by a separate DCI of each TRP.

In the embodiments of the present disclosure, signaling may be e.g. radio resource control (RRC) signaling; for example, is called an RRC message, e.g. including an MIB, system information, and a dedicated RRC message; or is called an RRC information element (RRC IE). The signaling may further be e.g. Medium Access Control (MAC) signaling; or is called a MAC control element (MAC CE). However, the present disclosure is not limited thereto.

In the following descriptions, without causing confusion, terms "PUCCH" and "physical uplink control channel" or "uplink control information" are interchangeable, and terms "PUSCH" and "physical uplink data channel" or "uplink data" are also interchangeable. Moreover, transmitting or receiving a PUCCH may be understood as transmitting or receiving uplink control information carried by a PUCCH; and transmitting or receiving a PUSCH may be understood as transmitting or receiving uplink data carried by a PUSCH. Terms "PRACH" and "physical random access channel" or "random access information" are interchangeable. Moreover, transmitting or receiving a PRACH may be understood as transmitting or receiving random access information carried by a PRACH.

In the embodiments of the present disclosure, an index or identifier of a transmission reception point (TRP) may include: an index of a control resource pool corresponding to a TRP, an index or identifier of a TRP, or an index of a reference signal set (RS set) corresponding to a TRP. Therefore, term "transmission reception point" may further be expressed as "reference signal set" or "control resource pool", etc.

### Embodiments of a first aspect

Embodiments of the present disclosure provide a power control method, which will be described from a terminal equipment.

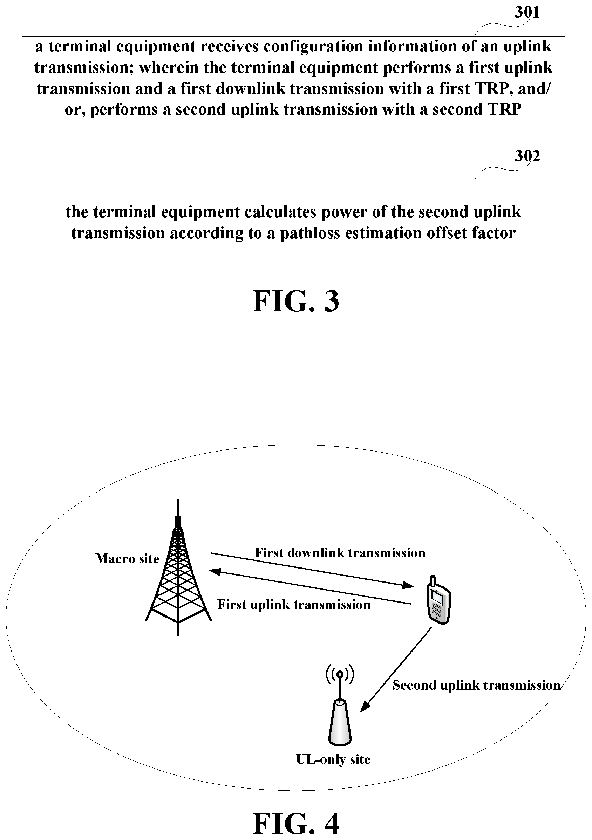

FIG. 3 is a schematic diagram of a power control method in the embodiments of the present disclosure, as shown in FIG. 3, the method includes:
301, a terminal equipment receives configuration information of an uplink transmission; wherein the terminal equipment performs a first uplink transmission and a first downlink transmission with a first transmission reception point (TRP), and/or, performs a second uplink transmission with a second transmission reception point (TRP); and
302, the terminal equipment calculates power of the second uplink transmission according to a pathloss estimation offset factor.

It should be noted that the above FIG. 3 only schematically describes embodiments of the present disclosure, however the present disclosure is not limited thereto. For example, an execution sequence of operations may be adjusted appropriately, moreover some other operations may be added or certain operations therein may be removed. Those skilled in the art may make appropriate modifications according to the above contents, not being limited to records in the above FIG. 3.

FIG. 4 is a schematic diagram of a scenario of an asymmetric uplink/downlink TRP operation in the embodiments of the present disclosure. The asymmetric uplink/downlink TRP operation may also be called an asymmetric DL sTRP/UL mTRP (asymmetric DL single TRP/UL multi-TRP) operation. For example, as shown in FIG. 4, a downlink transmission is based on a single TRP, i.e., a UE only receives downlink transmissions from one TRP, while an uplink transmission is based on a multi-TRP, i.e., an uplink transmission may be directed to multiple TRPs, e.g., two TRPs.

As shown in FIG. 4, some UL-only sites (e.g., a second transmission reception point, hereinafter also referred to as a UL-only TRP or UL-only site) may be deployed in a macro site (e.g., a first transmission reception point, hereinafter also referred to as a DL/UL TRP or DL/UL site). The macro site is a site with DL/UL, i.e., a downlink transmission comes from a macro site, while an uplink transmission may be directed to a macro site and a UL-only site.

Since a downlink transmission comes only from a site with DL/UL, for uplink power control of a UL-only site, a pathloss is unable to be estimated using a downlink signal, thus there is a mismatch between an uplink transmission and a pathloss reference signal. In the embodiments of the present disclosure, a terminal equipment calculates power of a second uplink transmission according to a pathloss estimation offset factor. Therefore, accuracy and reliability of an uplink transmission may be improved.

In some embodiments, the pathloss estimation offset factor is for at least one of the following channels or signals: a physical uplink shared channel (PUSCH), a physical uplink control channel (PUCCH), a physical random access channel (PRACH), or a sounding reference signal (SRS).

For example, for PUSCH power control, a pathloss estimation offset factor may be added to a calculation formula for power control of a PUSCH, and is as shown by *ΔPL_{PUSCH}* below. $\begin{matrix}{P}_{PUSCH , b , f , c} \left(i, j, {q}_{d}, l\right) \\ = min \left\{\begin{matrix}{P}_{CMAX , f , c} \left(i\right) , \\ {P}_{{0}_{PUSCH} , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) + {Δ}_{TF , b , f , c} \left(i\right) + {f}_{b , f , c} \left(i, l\right) + Δ {PL}_{PUSCH}\end{matrix}\right\}\end{matrix}$

In the above formula, *b* denotes a bandwidth part (BWP), *f* denotes a carrier, *c* denotes a serving cell, *i* denotes a transmission occasion, *j* denotes a parameter set configuration, *q_{d}* denotes a pathloss reference signal, and *l* denotes a power control adjustment state. For specific meanings of formulas and related parameters in the embodiments of the present disclosure, reference may further be made to related technologies, and details are not repeated here.

For example, for PUCCH power control, a pathloss estimation offset factor may be added to a calculation formula for power control of a PUCCH, and is as shown by *ΔPL_{PUCCH}* below. $\begin{matrix}{P}_{PUCCH , b , f , c} \left(i, {q}_{u}, {q}_{d}, l\right) \\ = min \left\{\begin{matrix}{P}_{CMAX , f , c} \left(i\right) , \\ {P}_{0 _ PUCCH , b , f , c} \left({q}_{u}\right) + 10 {log}_{10} \left({2}^{μ}⋅{M}_{RB , b , f , c}^{PUCCH}\left(i\right)\right) + {PL}_{b , f , c} \left({q}_{d}\right) + {Δ}_{F _ PUCCH} \left(F\right) + {Δ}_{TF , b , f , c} \left(i\right) + {g}_{b , f , c} \left(i, l\right) + Δ {PL}_{PUCCH}\end{matrix}\right\}\end{matrix}$

For example, for SRS power control, a pathloss estimation offset factor may be added to a calculation formula for power control of an SRS, and is as shown by *ΔPL_{SRS}* below. $\begin{matrix}{P}_{SRS , b , f , c} \left(i, {q}_{s}, l\right) \\ = min \left\{\begin{matrix}{P}_{CMAX , f , c} \left(i\right) , \\ {P}_{0 _ SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ {PL}_{b , f , c} \left({q}_{d}\right) + {h}_{b , f , c} \left(i, l\right) + Δ {PL}_{SRS}\end{matrix}\right\}\end{matrix}$

For example, for PRACH power control, a pathloss estimation offset factor may be added to a calculation formula for power control of a PRACH, and is as shown by *ΔPL_{PRACH}* below. ${P}_{PRACH , b , f , c} \left(i\right) = min \left\{\begin{matrix}{P}_{CMAX , f , c} \left(i\right) , \\ {P}_{PRACH , target , f , c} \left(i\right) + {PL}_{b , f , c} + Δ {PL}_{PRACH}\end{matrix}\right\}$

The foregoing exemplarily illustrates some examples of calculating power using a pathloss estimation offset factor, however the present disclosure is not limited thereto.

For another example, for PUSCH power control, a pathloss estimation offset factor may be added to a calculation formula for power control of a PUSCH, and is as shown by *ΔPL_{PUSCH}* below. Moreover, a scaling factor *α_{PUSCH}* may further be used, a range of *α_{PUSCH}* is between 0 and 1. $\begin{matrix}{P}_{PUSCH , b , f , c} \left(i, j, {q}_{d}, l\right) \\ = min \left\{\begin{matrix}{P}_{CMAX , f , c} \left(i\right) , \\ {P}_{0 _ PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) + {Δ}_{TF , b , f , c} \left(i\right) + {f}_{b , f , c} \left(i, l\right) + {α}_{PUSCH} ⋅ Δ {PL}_{PUSCH}\end{matrix}\right\}\end{matrix}$

For another example, for PUCCH power control, a pathloss estimation offset factor may be added to a calculation formula for power control of a PUCCH, and is as shown by *ΔPL_{PUCCH}* below. Moreover, a scaling factor *α_{PUCCH}* may further be used, a range of *α_{PUCCH}* is between 0 and 1. $\begin{matrix}{P}_{PUCCH , b , f , c} \left(i, {q}_{u}, {q}_{d}, l\right) \\ = min \left\{\begin{matrix}{P}_{CMAX , f , c} \left(i\right) , \\ {P}_{0 _ PUCCH , b , f , c} \left({q}_{u}\right) + 10 {log}_{10} \left({2}^{μ}⋅{M}_{RB , b , f , c}^{PUCCH}\left(i\right)\right) + {PL}_{b , f , c} \left({q}_{d}\right) + {Δ}_{F _ PUCCH} \left(F\right) + {Δ}_{TF , b , f , c} \left(i\right) + {g}_{b , f , c} \left(i, l\right) + {α}_{PUCCH} ⋅ Δ {PL}_{PUCCH}\end{matrix}\right\}\end{matrix}$

For another example, for SRS power control, a pathloss estimation offset factor may be added to a calculation formula for power control of an SRS, and is as shown by *ΔPL_{SRS}* below. Moreover, a scaling factor *α_{SRS}* may further be used, a range of *α_{SRS}* is between 0 and 1. $\begin{matrix}{P}_{SRS , b , f , c} \left(i, {q}_{s}, l\right) \\ = min \left\{\begin{matrix}{P}_{CMAX , f , c} \left(i\right) , \\ {P}_{0 _ SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ {PL}_{b , f , c} \left({q}_{d}\right) + {h}_{b , f , c} \left(i, l\right) + {α}_{SRS} ⋅ Δ {PL}_{SRS}\end{matrix}\right\}\end{matrix}$

For another example, for PRACH power control, a pathloss estimation offset factor may be added to a calculation formula for power control of a PRACH, and is as shown by *ΔPL_{PRACH}* below. Moreover, a scaling factor *α_{PRACH}* may further be used, a range of *α_{PRACH}* is between 0 and 1. ${P}_{PRACH , b , f , c} \left(i\right) = min \left\{\begin{matrix}{P}_{CMAX , f , c} \left(i\right) , \\ {P}_{PRACH , target , f , c} \left(i\right) + {PL}_{b , f , c} + {α}_{PRACH} ⋅ Δ {PL}_{PRACH}\end{matrix}\right\}$

The foregoing exemplarily illustrates some other examples of calculating power using a pathloss estimation offset factor, however the present disclosure is not limited thereto.

For a further example, for PUSCH power control, a pathloss estimation offset factor may be added to a calculation formula for power control of a PUSCH, and is as shown by *ΔPL_{PUSCH}* below. $\begin{matrix}{P}_{PUSCH , b , f , c} \left(i, j, {q}_{d}, l\right) \\ = min \left\{\begin{matrix}{P}_{CMAX , f , c} \left(i\right) , \\ {P}_{0 _ PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ \left({PL}_{b , f , c}\left({q}_{d}\right)+Δ{PL}_{PUSCH}\right) + {Δ}_{TF , b , f , c} \left(i\right) + {f}_{b , f , c} \left(i, l\right)\end{matrix}\right\}\end{matrix}$

For a further example, for SRS power control, a pathloss estimation offset factor may be added to a calculation formula for power control of an SRS, and is as shown by *ΔPL_{SRS}* below. $\begin{matrix}{P}_{SRS , b , f , c} \left(i, {q}_{s}, l\right) \\ = min \left\{\begin{matrix}{P}_{CMAX , f , c} \left(i\right) , \\ {P}_{0 _ SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ \left({PL}_{b , f , c}\left({q}_{d}\right)+Δ{PL}_{SRS}\right) + {h}_{b , f , c} \left(i, l\right)\end{matrix}\right\}\end{matrix}$

In some embodiments, values of pathloss estimation offset factors for a PUSCH, a PUCCH, an SRS, and a PRACH may be at least partially the same. For example, values of *ΔPL_{PUSCH}, ΔPL_{PUCCH}, ΔPL_{SRS},* and *ΔPL_{PRACH}* may be all the same, or some (e.g., two or more) values thereof may be the same. Values of *α_{PUSCH}, α_{PUCCH}, α_{SRS},* and *α_{PRACH}* may be all the same, or some (e.g., two or more) values thereof may be the same.

In some embodiments, values of pathloss estimation offset factors for a PUSCH, a PUCCH, an SRS, and a PRACH may be at least partially different. For example, values of *ΔPL_{PUSCH}, ΔPL_{PUCCH}, ΔPL_{SRS},* and *ΔPL_{PRACH}* may be all different, or some (e.g., two or more) values thereof may be different. Values of *α_{PUSCH}, α_{PUCCH}, α_{SRS},* and *α_{PRACH}* may be all different, or some (e.g., two or more) values thereof may be different.

In some embodiments, for different bandwidth parts (BWPs) or carriers or serving cells, pathloss estimation offset factors for a physical uplink shared channel (PUSCH) are the same.

For example, for different BWPs *(b),* a pathloss estimation offset factor *ΔPL_{PUSCH}* of PUSCHs is the same, i.e., *ΔPL_{PUSCH}* is common for different BWPs *(b).* For another example, for different carriers (f), a pathloss estimation offset factor *ΔPL_{PUSCH}* of PUSCHs is the same, i.e., *ΔPL_{PUSCH}* is common for different carriers (f). For a further example, for different serving cells *(c),* a pathloss estimation offset factor *ΔPL_{PUSCH}* of PUSCHs is the same, i.e., *ΔPL_{PUSCH}* is common for different serving cells *(c).*

In some embodiments, for different bandwidth parts (BWPs) or carriers or serving cells, pathloss estimation offset factors for a physical uplink shared channel (PUSCH) are different.

For example, for different BWPs *(b),* a pathloss estimation offset factor *ΔPL_{PUSCH}* of PUSCHs is different, i.e., *ΔPL_{PUSCH}* is specific for different BWPs *(b).* For another example, for different carriers (f), a pathloss estimation offset factor *ΔPL_{PUSCH}* of PUSCHs is different, i.e., *ΔPL_{PUSCH}* is specific for different carriers (f). For a further example, for different serving cells *(c),* a pathloss estimation offset factor *ΔPL_{PUSCH}* of PUSCHs is different, i.e., *ΔPL_{PUSCH}* is specific for different serving cells *(c).*

In some embodiments, for different pathloss reference signals, pathloss estimation offset factors for a physical uplink shared channel (PUSCH) are the same.

For example, for different pathloss reference signals (*q_{d}*), a pathloss estimation offset factor *ΔPL_{PUSCH}* of PUSCHs is the same, i.e., *ΔPL_{PUSCH}* is common for different pathloss reference signals *(q_{d}).*

In some embodiments, for different pathloss reference signals, pathloss estimation offset factors for a physical uplink shared channel (PUSCH) are different.

For example, for different pathloss reference signals (*q_{d}*), a pathloss estimation offset factor *ΔPL_{PUSCH}* of PUSCHs is different, i.e., *ΔPL_{PUSCH}* is specific for different pathloss reference signals *(q_{d}).*

In some embodiments, for different PUSCH power control adjustment states, pathloss estimation offset factors for a physical uplink shared channel (PUSCH) are the same.

For example, for different PUSCH power control adjustment states (*l*), a pathloss estimation offset factor *ΔPL_{PUSCH}* of PUSCHs is the same, i.e., *ΔPL_{PUSCH}* is common for different PUSCH power control adjustment states (*l*).

In some embodiments, for different PUSCH power control adjustment states, pathloss estimation offset factors for a physical uplink shared channel (PUSCH) are different.

For example, for different PUSCH power control adjustment states (*l*), a pathloss estimation offset factor *ΔPL_{PUSCH}* of PUSCHs is different, i.e., *ΔPL_{PUSCH}* is specific for different PUSCH power control adjustment states (*l*).

In some embodiments, for different PUSCH transmission occasions, pathloss estimation offset factors for a physical uplink shared channel (PUSCH) are the same.

For example, for different PUSCH transmission occasions (i), a pathloss estimation offset factor *ΔPL_{PUSCH}* of PUSCHs is the same, i.e., *ΔPL_{PUSCH}* is common for different PUSCH transmission occasions (i).

In some embodiments, for different PUSCH transmission occasions, pathloss estimation offset factors for a physical uplink shared channel (PUSCH) are different.

For example, for different PUSCH transmission occasions (i), a pathloss estimation offset factor *ΔPL_{PUSCH}* of PUSCHs is different, i.e., *ΔPL_{PUSCH}* is specific for different PUSCH transmission occasions (i).

In some embodiments, for different parameter set configurations, pathloss estimation offset factors for a physical uplink shared channel (PUSCH) are the same.

For example, for different parameter set configurations (j), a pathloss estimation offset factor *ΔPL_{PUSCH}* of PUSCHs is the same, i.e., *ΔPL_{PUSCH}* is common for different parameter set configurations (j).

In some embodiments, for different parameter set configurations, pathloss estimation offset factors for a physical uplink shared channel (PUSCH) are different.

For example, for different parameter set configurations (*j*), a pathloss estimation offset factor *ΔPL_{PUSCH}* of PUSCHs is different, i.e., *ΔPL_{PUSCH}* is specific for different parameter set configurations (*j*).

The above schematically describes a path loss estimation offset factor of a PUSCH, and the following describes a path loss estimation offset factor of a PUCCH.

In some embodiments, for different bandwidth parts (BWPs) or carriers or serving cells, pathloss estimation offset factors for a physical uplink control channel (PUCCH) are the same.

For example, for different BWPs *(b),* a pathloss estimation offset factor *ΔPL_{PUCCH}* of PUCCHs is the same, i.e., *ΔPL_{PUCCH}* is common for different BWPs *(b).* For another example, for different carriers (f), a pathloss estimation offset factor *ΔPL_{PUCCH}* of PUCCHs is the same, i.e., *ΔPL_{PUCCH}* is common for different carriers (f). For a further example, for different serving cells *(c),* a pathloss estimation offset factor *ΔPL_{PUCCH}* of PUCCHs is the same, i.e., *ΔPL_{PUCCH}* is common for different serving cells *(c).*

In some embodiments, for different bandwidth parts (BWPs) or carriers or serving cells, pathloss estimation offset factors for a physical uplink control channel (PUCCH) are different.

For example, for different BWPs *(b),* a pathloss estimation offset factor *ΔPL_{PUCCH}* of PUCCHs is different, i.e., *ΔPL_{PUCCH}* is specific for different BWPs *(b).* For another example, for different carriers (*f*), a pathloss estimation offset factor *ΔPL_{PUCCH}* of PUCCHs is different, i.e., *ΔPL_{PUCCH}* is specific for different carriers (*f*). For a further example, for different serving cells *(c),* a pathloss estimation offset factor *ΔPL_{PUCCH}* of PUCCHs is different, i.e., *ΔPL_{PUCCH}* is specific for different serving cells *(c).*

In some embodiments, for different pathloss reference signals, pathloss estimation offset factors for a physical uplink common channel (PUCCH) are the same.

For example, for different pathloss reference signals (*q_{d}*), a pathloss estimation offset factor *ΔPL_{PUCCH}* of PUCCHs is the same, i.e., *ΔPL_{PUCCH}* is common for different pathloss reference signals *(q_{d}).*

In some embodiments, for different pathloss reference signals, pathloss estimation offset factors for a physical uplink common channel (PUCCH) are different.

For example, for different pathloss reference signals (*q_{d}*), a pathloss estimation offset factor *ΔPL_{PUCCH}* of PUCCHs is different, i.e., *ΔPL_{PUCCH}* is specific for different pathloss reference signals *(q_{d}).*

In some embodiments, for different PUCCH power control adjustment states, pathloss estimation offset factors for a physical uplink control channel (PUCCH) are the same.

For example, for different PUCCH power control adjustment states (*l*), a pathloss estimation offset factor *ΔPL_{PUCCH}* of PUCCHs is the same, i.e., *ΔPL_{PUCCH}* is common for different PUSCH power control adjustment states (*l*).

In some embodiments, for different PUCCH power control adjustment states, pathloss estimation offset factors for a physical uplink control channel (PUCCH) are different.

For example, for different PUCCH power control adjustment states (*l*), a pathloss estimation offset factor *ΔPL_{PUCCH}* of PUCCHs is different, i.e., *ΔPL_{PUCCH}* is specific for different PUSCH power control adjustment states (*l*).

In some embodiments, for different PUCCH transmission occasions, pathloss estimation offset factors for a physical uplink control channel (PUCCH) are the same.

For example, for different PUCCH transmission occasions (i), a pathloss estimation offset factor *ΔPL_{PUCCH}* of PUCCHs is the same, i.e., *ΔPL_{PUCCH}* is common for different PUSCH transmission occasions (i).

In some embodiments, for different PUCCH transmission occasions, pathloss estimation offset factors for a physical uplink control channel (PUCCH) are different.

For example, for different PUCCH transmission occasions (i), a pathloss estimation offset factor *ΔPL_{PUCCH}* of PUCCHs is different, i.e., *ΔPL_{PUCCH}* is specific for different PUSCH transmission occasions (i).

The above schematically describes a path loss estimation offset factor of a PUCCH, and the following describes a path loss estimation offset factor of an SRS.

In some embodiments, for different bandwidth parts (BWPs) or carriers or serving cells, pathloss estimation offset factors for a sounding reference signal (SRS) are the same.

For example, for different BWPs *(b),* a pathloss estimation offset factor *ΔPL_{SRS}* of SRSs is the same, i.e., *ΔPL_{SRS}* is common for different BWPs *(b).* For another example, for different carriers (f), a pathloss estimation offset factor *ΔPL_{SRS}* of SRSs is the same, i.e., *ΔPL_{SRS}* is common for different carriers (*f*). For a further example, for different serving cells *(c),* a pathloss estimation offset factor *ΔPL_{SRS}* of SRSs is the same, i.e., *ΔPL_{SRS}* is common for different serving cells *(c).*

In some embodiments, for different bandwidth parts (BWPs) or carriers or serving cells, pathloss estimation offset factors for a sounding reference signal (SRS) are different.

For example, for different BWPs *(b),* a pathloss estimation offset factor *ΔPL_{SRS}* of SRSs is different, i.e., *ΔPL_{SRS}* is specific for different BWPs *(b).* For another example, for different carriers (f), a pathloss estimation offset factor *ΔPL_{SRS}* of SRSs is different, i.e., *ΔPL_{SRS}* is specific for different carriers (f). For a further example, for different serving cells *(c),* a pathloss estimation offset factor *ΔPL_{SRS}* of SRSs is different, i.e., *ΔPL_{SRS}* is specific for different serving cells *(c).*

In some embodiments, for different pathloss reference signals, pathloss estimation offset factors for a sounding reference signal (SRS) are the same.

For example, for different pathloss reference signals (*q_{d}*), a pathloss estimation offset factor *ΔPL_{SRS}* of SRSs is the same, i.e., *ΔPL_{SRS}* is common for different pathloss reference signals *(q_{d}).*

In some embodiments, for different pathloss reference signals, pathloss estimation offset factors for a sounding reference signal (SRS) are different.

For example, for different pathloss reference signals (*q_{d}*), a pathloss estimation offset factor *ΔPL_{SRS}* of SRSs is different, i.e., *ΔPL_{SRS}* is specific for different pathloss reference signals *(q_{d}).*

In some embodiments, for different SRS power control adjustment states, pathloss estimation offset factors for a sounding reference signal (SRS) are the same.

For example, for different SRS power control adjustment states (*l*), a pathloss estimation offset factor *ΔPL_{SRS}* of SRSs is the same, i.e., *ΔPL_{SRS}* is common for different SRS power control adjustment states (*l*).

In some embodiments, for different SRS power control adjustment states, pathloss estimation offset factors for a sounding reference signal (SRS) are different.

For example, for different SRS power control adjustment states (*l*), a pathloss estimation offset factor *ΔPL_{SRS}* of SRSs is different, i.e., *ΔPL_{SRS}* is specific for different SRS power control adjustment states (*l*).

In some embodiments, for different SRS transmission occasions, pathloss estimation offset factors for a sounding reference signal (SRS) are the same.

For example, for different SRS transmission occasions (*i*), a pathloss estimation offset factor *ΔPL_{SRS}* of SRSs is the same, i.e., *ΔPL_{SRS}* is common for different SRS transmission occasions (*i*).

In some embodiments, for different SRS transmission occasions, pathloss estimation offset factors for a sounding reference signal (SRS) are different.

For example, for different SRS transmission occasions (*i*), a pathloss estimation offset factor *ΔPL_{SRS}* of SRSs is different, i.e., *ΔPL_{SRS}* is specific for different SRS transmission occasions (*i*).

The above schematically describes a pathloss estimation offset factor of an SRS, the present disclosure is not limited thereto.

In some embodiments, for a physical uplink shared channel (PUSCH) or a physical uplink control channel (PUCCH), one power control adjustment state is associated with the second transmission reception point (TRP); wherein a power control adjustment state associated with the second transmission reception point (TRP) is predefined, or is configured via RRC, or is indicated via a MAC CE and/or DCI.

For example, in an asymmetric DL sTRP/UL mTRP operation, for a PUSCH/a PUCCH, one power control adjustment state (e.g., a first power control state or a second power control state) may be associated with a UL-only site. Which power control state is associated with a UL-only site may be predefined or configured (e.g., via RRC). Or, which power control state is associated with a UL-only site may be dynamically changed, for example, indicated via a MAC CE and/or DCI.

In some embodiments, association between the power control adjustment state and the second transmission reception point (TRP) is configured via association between the power control adjustment state and the pathloss estimation offset factor.

For example, association (second association) between a power control state and a UL-only site may be configured via association (first association) between a power control state and a pathloss estimation offset factor. For example, one power control state (e.g., a second power control state) may be associated with a pathloss estimation offset factor, and another power control state (e.g., a first power control state) is not associated with the pathloss estimation offset factor.

In some embodiments, a power control adjustment state of a physical uplink shared channel (PUSCH) and/or a power control adjustment state of a physical uplink control channel (PUCCH) is/are associated with the pathloss estimation offset factor; for a power control adjustment state of the first transmission reception point (TRP), the pathloss estimation offset factor is set to zero; and for a power control adjustment state of the second transmission reception point (TRP), the pathloss estimation offset factor is set to non-zero.

For example, two power control states of a PUSCH/a PUCCH may be associated with a pathloss estimation offset factor. For a power control state targeting at a site having both DLs and ULs (a UL/DL site), a pathloss estimation offset factor is set to zero. For a power control state targeting at a UL-only site, a pathloss estimation offset factor may be set to non-zero.

In some embodiments, the pathloss estimation offset factor is configured with a TCI state for a physical uplink shared channel (PUSCH) and/or a physical uplink control channel (PUCCH), the TCI state including: a joint uplink/downlink TCI state (joint DL/UL TCI state), a separate uplink TCI state (separate UL TCI state) or a separate downlink TCI state (separate DL TCI state).

For example, a pathloss estimation offset factor may be configured with a TCI state of a PUSCH/a PUCCH (e.g., an RRC IE TCI-state or a TCI-UL-state), wherein the TCI state may be a joint DL/UL TCI state, a separate UL TCI state, or a separate DL TCI state.

In some embodiments, the pathloss estimation offset factor is configured with a pathloss reference signal for a physical uplink shared channel (PUSCH) and/or a physical uplink control channel (PUCCH).

The above describes cases for PUSCHs/PUCCHs, and cases for SRSs are schematically described below.

In some embodiments, for a sounding reference signal (SRS), one power control adjustment state is associated with the second transmission reception point (TRP); wherein a power control adjustment state associated with the second transmission reception point (TRP) is predefined, or is configured via RRC, or is indicated via a MAC CE and/or DCI.

For example, in an asymmetric DL sTRP/UL mTRP operation, for an SRS, one power control adjustment state for the SRS may be associated with a UL-only site. Which power control state is associated with a UL-only site may be predefined or configured, for example, configured via RRC. Or, which power control state is associated with a UL-only site may be dynamically changed, for example, indicated via a MAC CE or DCI.

In some embodiments, a power control adjustment state associated with a second transmission reception point (TRP) includes at least one of the following:
a first closed-loop power control state for an SRS which is same as a PUSCH;
a second closed-loop power control state for an SRS which is same as a PUSCH;
a first closed-loop power control state for an SRS which is separate from a PUSCH; or
a second closed-loop power control state for an SRS which is separate from a PUSCH.

For example, a second closed-loop power control state for an SRS which is same as a PUSCH is associated with a UL-only site, and a second closed-loop power control state for an SRS which is separate from a PUSCH is also associated with the UL-only site.

In some embodiments, association between the power control adjustment state and the second transmission reception point (TRP) is configured via association between the power control adjustment state and the pathloss estimation offset factor.

For example, association (second association) between a power control state and a UL-only site may be configured via association (first association) between a power control state and a pathloss estimation offset factor. For example, some power control states may be associated with a pathloss estimation offset factor, and other power control states are not associated with the pathloss estimation offset factor.

In some embodiments, at least a part of power control adjustment states of a sounding reference signal (SRS) is/are associated with the pathloss estimation offset factor; for a power control adjustment state of the first transmission reception point (TRP), the pathloss estimation offset factor is set to zero; and for a power control adjustment state of the second transmission reception point (TRP), the pathloss estimation offset factor is set to non-zero.

For example, all (or a subset) of power control states of an SRS may be associated with a pathloss estimation offset factor. For a power control state targeting at a site having both DLs and ULs (a UL/DL site), a pathloss estimation offset factor is set to zero. For a power control state targeting at a UL-only site, a pathloss estimation offset factor may be set to non-zero.

In some embodiments, the pathloss estimation offset factor is configured with a TCI state for a sounding reference signal (SRS), the TCI state including: a joint uplink/downlink TCI state (joint DL/UL TCI state), a separate uplink TCI state (separate UL TCI state) or a separate downlink TCI state (separate DL TCI state).

For example, a pathloss estimation offset factor may be configured with a TCI state of an SRS (e.g., an RRC IE TCI-state or a TCI-UL-state), wherein the TCI state may be a joint DL/UL TCI state, a separate UL TCI state, or a separate DL TCI state.

In some embodiments, the pathloss estimation offset factor is configured with a pathloss reference signal for a sounding reference signal (SRS).

In some embodiments, a terminal equipment transmits a sounding reference signal (SRS), the sounding reference signal (SRS) having predefined power or configured power, and the sounding reference signal (SRS) being used by a network device to calculate the pathloss estimation offset factor.

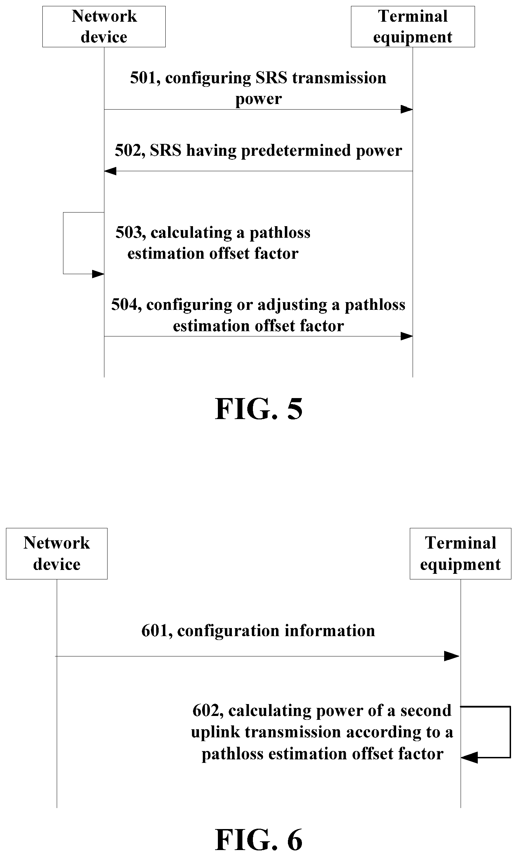

FIG. 5 is an example diagram of calculating a pathloss estimation offset factor in the embodiments of the present disclosure. As shown in FIG. 5, in order to determine a value of a pathloss estimation offset factor, a network device may configure transmission power of an SRS (as shown in 501), and a terminal equipment may transmit an SRS with a predefined/configured Tx power (as shown in 502). Both a DL/UL site and a UL-only site may receive the SRS, enabling a network side to calculate a value of a pathloss estimation offset factor (as shown in 503). The network device may configure or adjust a pathloss estimation offset factor for subsequent uplink transmissions (as shown in 504).

For example, one, more, or all of the following SRS usage parameters (usage) may be applied to an SRS transmission with configured/predefined transmission power: a codebook, a non-codebook (nonCodebook), antenna switching (antennaSwitching), beam management (beamManagement).

For another example, a new SRS usage parameter (usage), e.g., an SRS usage for power control, may be introduced.

For another example, an SRS with different Tx beams may be used to determine a pathloss estimation offset factor. An SRS with predetermined transmission power may be transmitted using different Tx beams, respectively targeting a UL-only site and a DL/UL site.

In some embodiments, the pathloss estimation offset factor is predefined, or is configured with one or more values, and/or, one value for a physical uplink shared channel (PUSCH)/a physical uplink control channel (PUCCH)/a sounding reference signal (SRS) is configured or indicated.

For example, a set/group/list of values of a pathloss estimation offset factor may be predefined/configured, and the value of the pathloss estimation offset factor applied to PUSCHs/PUCCHs/SRSs may be further configured or indicated (via RRC and/or a MAC CE and/or DCI).

For another example, a value of a pathloss estimation offset factor may be determined via AI/ML.

In some embodiments, a plurality of second transmission reception points (TRPs) are configured in the same cell, and a plurality of pathloss estimation offset factors are configured or indicated.

For example, more than one UL-only site may be deployed in the same cell, accordingly, more than one pathloss estimation offset factor may be configured. For example, for each UL-only site, one pathloss estimation offset factor is configured or indicated. For another example, one pathloss estimation offset factor may be configured, and a value of the pathloss estimation offset factor may be further configured/indicated for different UL-only sites.

In some embodiments, the pathloss estimation offset factors are applied to closed-loop power control and/or open-loop power control.

For example, a pathloss estimation offset factor may be applied to closed-loop power control, or to open-loop power control, or to both closed-loop power control and open-loop power control.

A pathloss estimation offset factor is schematically described above. Power header room (PHR) reporting of the present disclosure is schematically described below.

In some embodiments, the pathloss estimation offset factor is used for at least one of the following PHR:
a first type PHR based on an actual PUSCH transmission (which may be called Type-1 PHR, actual PHR);
a first type PHR based on a reference PUSCH transmission (which may be called Type-1 PHR, virtual PHR);
a third type PHR based on an actual SRS transmission (which may be called Type-3 PHR, actual PHR); or
a third type PHR based on a reference SRS transmission (which may be called Type-3 PHR, virtual PHR).

For example, Type-1 PHR based on an actual PUSCH transmission is calculated using the following formula: $\begin{matrix}{PH}_{type 1 , b , f , c} \left(i, j, {q}_{d}, l\right) \\ = {P}_{CMAX , f , c} \left(i\right) \\ - \left\{\begin{matrix}{P}_{0 _ PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) \\ + {Δ}_{TF , b , f , c} \left(i\right) + {f}_{b , f , c} \left(i, l\right) + Δ {PL}_{PUSCH}\end{matrix}\right\}\end{matrix}$

For example, Type-1 PHR based on a reference PUSCH transmission is calculated using the following formula: $\begin{matrix}{PH}_{type 1 , b , f , c} \left(i, j, {q}_{d}, l\right) \\ = {P}_{CMAX , f , c} \left(i\right) \\ - \left\{{P}_{0 _ PUSCH , b , f , c}\left(j\right)+{α}_{b , f , c}\left(j\right)⋅{PL}_{b , f , c}\left({q}_{d}\right)+{f}_{b , f , c}\left(i, l\right)+Δ{PL}_{PUSCH}\right\}\end{matrix}$

For example, Type-3 PHR based on an actual SRS transmission is calculated using the following formula: $\begin{matrix}{PH}_{type 3 , b , f , c} \left(i, {q}_{s}\right) \\ = {P}_{CMAX , f , c} \left(i\right) \\ - \left\{\begin{matrix}{P}_{0 _ SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ {PL}_{b , f , c} \left({q}_{d}\right) \\ + {h}_{b , f , c} \left(i\right) + Δ {PL}_{SRS}\end{matrix}\right\}\end{matrix}$

For example, Type-3 PHR based on a reference SRS transmission is calculated using the following formula: $\begin{matrix}{PH}_{type 3 , b , f , c} \left(i, {q}_{s}\right) \\ = {P}_{CMAX , f , c} \left(i\right) \\ - \left\{{P}_{0 _ SRS , b , f , c}\left({q}_{s}\right)+{α}_{SRS , b , f , c}\left({q}_{s}\right)⋅{PL}_{b , f , c}\left({q}_{d}\right)+{h}_{b , f , c}\left(i\right)+Δ{PL}_{SRS}\right\}\end{matrix}$

For another example, Type-1 PHR based on an actual PUSCH transmission is calculated using the following formula: $\begin{matrix}{PH}_{type 1 , b , f , c} \left(i, j, {q}_{d}, l\right) \\ = {P}_{CMAX , f , c} \left(i\right) \\ - \left\{\begin{matrix}{P}_{0 _ PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) \\ + {Δ}_{TF , b , f , c} \left(i\right) + {f}_{b , f , c} \left(i, l\right) + {α}_{PUSCH} ⋅ Δ {PL}_{PUSCH}\end{matrix}\right\}\end{matrix}$

For another example, Type-1 PHR based on a reference PUSCH transmission is calculated using the following formula: $\begin{matrix}{PH}_{type 1 , b , f , c} \left(i, j, {q}_{d}, l\right) \\ = {P}_{CMAX , f , c} \left(i\right) \\ - \left\{\begin{matrix}{P}_{0 _ PUSCH , b , f , c} \left(j\right) + {α}_{b , f , c} \left(j\right) ⋅ {PL}_{b , f , c} \left({q}_{d}\right) + {f}_{b , f , c} \left(i, l\right) + {α}_{PUSCH} \\ ⋅ Δ {PL}_{PUSCH}\end{matrix}\right\}\end{matrix}$

For another example, Type-3 PHR based on an actual SRS transmission is calculated using the following formula: $\begin{matrix}{PH}_{ty , b , f , c} \left(i, {q}_{s}\right) \\ = {P}_{CMAX , f , c} \left(i\right) \\ - \left\{\begin{matrix}{P}_{0 _ SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ {PL}_{b , f , c} \left({q}_{d}\right) \\ + {h}_{b , f , c} \left(i\right) + {α}_{SRS} ⋅ Δ {PL}_{SRS}\end{matrix}\right\}\end{matrix}$

For another example, Type-3 PHR based on a reference SRS transmission is calculated using the following formula: $\begin{matrix}{PH}_{type 3 , b , f , c} \left(i, {q}_{s}\right) \\ = {P}_{CMAX , f , c} \left(i\right) \\ - \left\{{P}_{0 _ SRS , b , f , c}\left({q}_{s}\right)+{α}_{SRS , b , f , c}\left({q}_{s}\right)⋅{PL}_{b , f , c}\left({q}_{d}\right)+{h}_{b , f , c}\left(i\right)+{α}_{SRS}⋅Δ{PL}_{SRS}\right\}\end{matrix}$

For another example, Type-1 PHR based on an actual PUSCH transmission is calculated using the following formula: $\begin{matrix}{PH}_{type , b , f , c} \left(i, j, {q}_{d}, l\right) \\ = {P}_{CMAX , f , c} \left(i\right) \\ - \left\{{P}_{0 _ PUSCH , b , f , c}\left(j\right)+10{log}_{10}\left({2}^{μ}⋅{M}_{RB , b , f , c}^{PUSCH}\left(i\right)\right)+{α}_{b , f , c}\left(j\right)⋅\left(\begin{matrix}{PL}_{b , f , c} \left({q}_{d}\right) \\ + Δ {PL}_{PUSCH}\end{matrix}\right)+{Δ}_{TF , b , f , c}\left(i\right)+{f}_{b , f , c}\left(i, l\right)\right\}\end{matrix}$

For another example, Type-1 PHR based on a reference PUSCH transmission is calculated using the following formula: $\begin{matrix}{PH}_{type 1 , b , f , c} \left(i, j, {q}_{d}, l\right) \\ = {P}_{CMAX , f , c} \left(i\right) \\ - \left\{{P}_{0 _ PUSCH , b , f , c}\left(j\right)+{α}_{b , f , c}\left(j\right)⋅\left({PL}_{b , f , c}\left({q}_{d}\right)+Δ{PL}_{PUSCH}\right)+{f}_{b , f , c}\left(i, l\right)\right\}\end{matrix}$

For another example, Type-3 PHR based on an actual SRS transmission is calculated using the following formula: $\begin{matrix}{PH}_{type 3 , b , f , c} \left(i, {q}_{s}\right) \\ = {P}_{CMAX , f , c} \left(i\right) \\ - \left\{\begin{matrix}{P}_{0 _ SRS , b , f , c} \left({q}_{s}\right) + 10 {log}_{10} \left({2}^{μ}⋅{M}_{SRS , b , f , c}\left(i\right)\right) \\ + {α}_{SRS , b , f , c} \left({q}_{s}\right) ⋅ \left({PL}_{b , f , c}\left({q}_{d}\right)+Δ{PL}_{SRS}\right) + {h}_{b , f , c} \left(i\right)\end{matrix}\right\}\end{matrix}$

For another example, Type-3 PHR based on a reference SRS transmission is calculated using the following formula: $\begin{matrix}{PH}_{typ , b , f , c} \left(i, {q}_{s}\right) \\ = {P}_{CMAX , f , c} \left(i\right) \\ - \left\{{P}_{0 _ SRS , b , f , c}\left({q}_{s}\right)+{α}_{SRS , b , f , c}\left({q}_{s}\right)⋅\left({PL}_{b , f , c}\left({q}_{d}\right)+Δ{PL}_{SRS}\right)+{h}_{b , f , c}\left(i\right)\right\}\end{matrix}$

In some embodiments, a third type PHR based on an actual SRS transmission and/or a third type PHR based on a reference SRS transmission is/are associated with a closed-loop power control state (/) for an SRS; wherein the closed-loop power control state for an SRS is at least one of the following:
a first closed-loop power control state for an SRS which is same as a PUSCH;
a second closed-loop power control state for an SRS which is same as a PUSCH;
a first closed-loop power control state for an SRS which is separate from a PUSCH; or
a second closed-loop power control state for an SRS which is separate from a PUSCH.

In some embodiments, a third type PHR based on an actual SRS transmission and/or a third type PHR based on a reference SRS transmission is/are associated with a closed-loop power control state (*l*) for an SRS; wherein the closed-loop power control state for an SRS is at least one of the following:
a first closed-loop power control state for an SRS which is separate from a PUSCH; or
a second closed-loop power control state for an SRS which is separate from a PUSCH.

For example, Type-3 PHR based on an actual SRS transmission is calculated using the following formula: $\begin{matrix}{PH}_{type 3 , b , f , c} \left(i, {q}_{s}, l\right) \\ = {P}_{CMAX , f , c} \left(i\right) \\ - \left\{\begin{matrix}{P}_{0 _ SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ {PL}_{b , f , c} \left({q}_{d}\right) \\ + {h}_{b , f , c} \left(i, l\right) + Δ {PL}_{SRS}\end{matrix}\right\}\end{matrix}$

For example, Type-3 PHR based on a reference SRS transmission is calculated using the following formula: $\begin{matrix}{PH}_{type 3 , b , f , c} \left(i, {q}_{s}, l\right) \\ = {P}_{CMAX , f , c} \left(i\right) - \left\{{P}_{0 _ SRS , b , f , c}\left({q}_{s}\right)+{α}_{SRS , b , f , c}\left({q}_{s}\right)⋅{PL}_{b , f , c}\left({q}_{d}\right)+{h}_{b , f , c}\left(i, l\right)+Δ{PL}_{SRS}\right\}\end{matrix}$

For another example, Type-3 PHR based on an actual SRS transmission is calculated using the following formula: $\begin{matrix}{PH}_{type , b , f , c} \left(i, {q}_{s}, l\right) \\ = {P}_{CMAX , f , c} \left(i\right) \\ - \left\{\begin{matrix}{P}_{0 _ SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ {PL}_{b , f , c} \left({q}_{d}\right) \\ + {h}_{b , f , c} \left(i, l\right) + {α}_{SRS} ⋅ Δ {PL}_{SRS}\end{matrix}\right\}\end{matrix}$

For another example, Type-3 PHR based on a reference SRS transmission is calculated using the following formula: $\begin{matrix}{PH}_{typ b , f , c} \left(i, {q}_{s}, l\right) \\ = {P}_{CMAX , f , c} \left(i\right) \\ - \left\{{P}_{0 _ SRS , b , f , c}\left({q}_{s}\right)+{α}_{SRS , b , f , c}\left({q}_{s}\right)⋅{PL}_{b , f , c}\left({q}_{d}\right)+{h}_{b , f , c}\left(i, l\right)+{α}_{SRS}⋅Δ{PL}_{SRS}\right\}\end{matrix}$

For another example, Type-3 PHR based on an actual SRS transmission is calculated using the following formula: $\begin{matrix}{PH}_{type 3 , b , f , c} \left(i, {q}_{s}, l\right) \\ = {P}_{CMAX , f , c} \left(i\right) \\ - \left\{{P}_{0 _ SRS , b , f , c}\left({q}_{s}\right)+10{log}_{10}\left({2}^{μ}⋅{M}_{SRS , b , f , c}\left(i\right)\right)+{α}_{SRS , b , f , c}\left({q}_{s}\right)⋅\left(\begin{matrix}{PL}_{b , f , c} \left({q}_{d}\right) \\ + Δ {PL}_{SRS}\end{matrix}\right)+{h}_{b , f , c}\left(i, l\right)\right\}\end{matrix}$

For another example, Type-3 PHR based on a reference SRS transmission is calculated using the following formula: $\begin{matrix}{PH}_{type 3 , b , f , c} \left(i, {q}_{s}, l\right) \\ = {P}_{CMAX , f , c} \left(i\right) - \left\{{P}_{0 _ SRS , b , f , c}\left({q}_{s}\right)+{α}_{SRS , b , f , c}\left({q}_{s}\right)⋅\left({PL}_{b , f , c}\left({q}_{d}\right)+Δ{PL}_{SRS}\right)+{h}_{b , f , c}\left(i, l\right)\right\}\end{matrix}$

In some embodiments, in a MAC CE for PHR reporting, an SRS power control state is indicated.

In one example, for example, whether an SRS power control state is the same as a PUSCH or separate from a PUSCH may be indicated in the MAC CE. For example, if an SRS power control state is indicated to be the same as a PUSCH, two Type-3 PHRs may be reported in a MAC CE, e.g., a first one is used for a first SRS power control state that is the same as a PUSCH, and a second one is used for a second SRS power control state that is the same as a PUSCH.

For another example, if an SRS power control state is indicated to be separate from a PUSCH, two Type-3 PHRs may be reported in a MAC CE, e.g., a first one is used for a first SRS power control state that is separate from a PUSCH, and a second one is used for a second SRS power control state that is separate from a PUSCH.

In another example, more than two Type-3 PHRs (e.g., three or four) may be reported in a MAC CE. For each Type-3 PHR reported in a MAC CE, an SRS power control state may be indicated. An indication of an SRS power control state may be explicit, or may be implicit.

In a further example, one Type-3 PHR may be reported in a MAC CE. For a Type-3 PHR reported in a MAC CE, an SRS power control state is indicated.

Each of the above embodiments only exemplarily describes the present disclosure, however the present disclosure is not limited thereto, appropriate modifications may be further made based on each of the above embodiments. For example, each of the above embodiments may be used individually, or one or more of the above embodiments may be combined.

As may be known from the above embodiments, a terminal equipment calculates power of a second uplink transmission according to a pathloss estimation offset factor. Therefore, even in an asymmetric uplink/downlink TRP operation scenario, appropriate power control is able to be performed, which may improve accuracy and reliability of an uplink transmission.

### Embodiments of a second aspect

Embodiments of the present disclosure provide a power control method, which will be described from a network device side. Embodiments of the second aspect may be combined with embodiments of the first aspect, the same contents as embodiments of the first aspect are not further elaborated.

FIG. 6 is a schematic diagram of a power control method in the embodiments of the present disclosure, as shown in FIG. 6, the method includes:
601, a network device transmits configuration information of an uplink transmission to a terminal equipment; wherein the terminal equipment performs a first uplink transmission and a first downlink transmission with a first transmission reception point (TRP), and/or, performs a second uplink transmission with a second transmission reception point (TRP).

As shown in FIG. 6, the method may further include:
602, the terminal equipment calculates power of the second uplink transmission according to a pathloss estimation offset factor.

It should be noted that the above FIG. 6 only schematically describes embodiments of the present disclosure, however the present disclosure is not limited thereto. For example, an execution sequence of operations may be adjusted appropriately, moreover some other operations may be added or certain operations therein may be removed. Those skilled in the art may make appropriate modifications according to the above contents, not being limited to records in the above FIG. 6.

Each of the above embodiments only exemplarily describes the present disclosure, however the present disclosure is not limited thereto, appropriate modifications may be further made based on each of the above embodiments. For example, each of the above embodiments may be used individually, or one or more of the above embodiments may be combined.

Through embodiments of the present disclosure, a terminal equipment calculates power of a second uplink transmission according to a pathloss estimation offset factor. Therefore, even in an asymmetric uplink/downlink TRP operation scenario, appropriate power control is able to be performed, which may improve accuracy and reliability of an uplink transmission.

### Embodiments of a third aspect

Embodiments of the present disclosure provide a power control apparatus. The apparatus for example may be a terminal equipment, or may be one or more components or assemblies configured in a terminal equipment, and contents same as those in embodiments of the first aspect are not repeated.

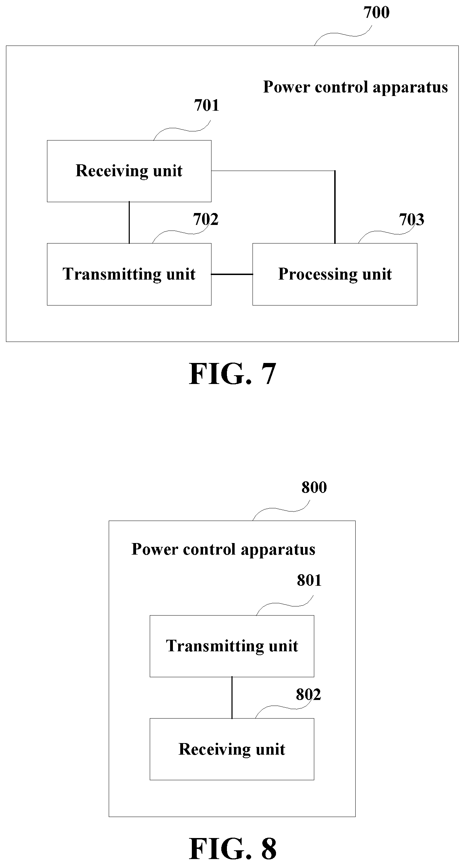

FIG. 7 is a schematic diagram of a power control apparatus in the embodiments of the present disclosure. As shown in FIG. 7, a power control apparatus 700 includes:
a receiving unit 701 configured to receive configuration information of an uplink transmission; wherein a terminal equipment performs a first uplink transmission and a first downlink transmission with a first transmission reception point (TRP), and/or, performs a second uplink transmission with a second transmission reception point (TRP); and
a processing unit 702 configured to calculate power of the second uplink transmission according to a pathloss estimation offset factor.

In some embodiments, the pathloss estimation offset factor is for at least one of the following channels or signals: a physical uplink shared channel (PUSCH), a physical uplink control channel (PUCCH), a physical random access channel (PRACH), or a sounding reference signal (SRS).

In some embodiments, for different bandwidth parts (BWPs) or carriers or serving cells, pathloss estimation offset factors for a physical uplink shared channel (PUSCH) are the same, or pathloss estimation offset factors for a physical uplink shared channel (PUSCH) are different;
and/or, for different pathloss reference signals, pathloss estimation offset factors for a physical uplink shared channel (PUSCH) are the same, or pathloss estimation offset factors for a physical uplink shared channel (PUSCH) are different;
and/or, for different PUSCH power control adjustment states, pathloss estimation offset factors for a physical uplink shared channel (PUSCH) are the same, or pathloss estimation offset factors for a physical uplink shared channel (PUSCH) are different;
and/or, for different PUSCH transmission occasions, pathloss estimation offset factors for a physical uplink shared channel (PUSCH) are the same, or pathloss estimation offset factors for a physical uplink shared channel (PUSCH) are different;
and/or, for different parameter set configurations, pathloss estimation offset factors for a physical uplink shared channel (PUSCH) are the same, or pathloss estimation offset factors for a physical uplink shared channel (PUSCH) are different.

In some embodiments, for different bandwidth parts (BWPs) or carriers or serving cells, pathloss estimation offset factors for a physical uplink control channel (PUCCH) are the same, or pathloss estimation offset factors for a physical uplink control channel (PUCCH) are different;
and/or, for different pathloss reference signals, pathloss estimation offset factors for a physical uplink control channel (PUCCH) are the same, or pathloss estimation offset factors for a physical uplink control channel (PUCCH) are different;
and/or, for different PUCCH power control adjustment states, pathloss estimation offset factors for a physical uplink control channel (PUCCH) are the same, or pathloss estimation offset factors for a physical uplink control channel (PUCCH) are different;
and/or, for different PUCCH transmission occasions, pathloss estimation offset factors for a physical uplink control channel (PUCCH) are the same, or pathloss estimation offset factors for a physical uplink control channel (PUCCH) are different.

In some embodiments, for different bandwidth parts (BWPs) or carriers or serving cells, pathloss estimation offset factors for a sounding reference signal (SRS) are the same, or pathloss estimation offset factors for a sounding reference signal (SRS) are different;
and/or, for different pathloss reference signals, pathloss estimation offset factors for a sounding reference signal (SRS) are the same, or pathloss estimation offset factors for a sounding reference signal (SRS) are different;
and/or, for different SRS power control adjustment states, pathloss estimation offset factors for a sounding reference signal (SRS) are the same, or pathloss estimation offset factors for a sounding reference signal (SRS) are different;
and/or, for different SRS transmission occasions, pathloss estimation offset factors for a sounding reference signal (SRS) are the same, or pathloss estimation offset factors for a sounding reference signal (SRS) are different.

In some embodiments, for a physical uplink shared channel (PUSCH) or a physical uplink control channel (PUCCH), one power control adjustment state is associated with the second transmission reception point (TRP);
wherein the power control adjustment state associated with the second transmission reception point (TRP) is predefined, or is configured via RRC, or is indicated via a MAC CE and/or DCI.

In some embodiments, association between the power control adjustment state and the second transmission reception point (TRP) is configured via association between the power control adjustment state and the pathloss estimation offset factor.

In some embodiments, a power control adjustment state of a physical uplink shared channel (PUSCH) and/or a power control adjustment state of a physical uplink control channel (PUCCH) is/are associated with the pathloss estimation offset factor; for a power control adjustment state of the first transmission reception point (TRP), the pathloss estimation offset factor is set to zero; and for a power control adjustment state of the second transmission reception point (TRP), the pathloss estimation offset factor is set to non-zero.

In some embodiments, the pathloss estimation offset factor is configured with a TCI state for a physical uplink shared channel (PUSCH) and/or a physical uplink control channel (PUCCH), the TCI state including: a joint uplink/downlink TCI state (joint DL/UL TCI state), a separate uplink TCI state (separate UL TCI state) or a separate downlink TCI state (separate DL TCI state).

In some embodiments, the pathloss estimation offset factor is configured with a pathloss reference signal for a physical uplink shared channel (PUSCH) and/or a physical uplink control channel (PUCCH).

In some embodiments, for a sounding reference signal (SRS), one power control adjustment state is associated with the second transmission reception point (TRP);
wherein the power control adjustment state associated with the second transmission reception point (TRP) is predefined, or is configured via RRC, or is indicated via a MAC CE and/or DCI.

In some embodiments, a power control adjustment state associated with the second transmission reception point (TRP) includes at least one of the following:
a first closed-loop power control state for an SRS which is same as a PUSCH;
a second closed-loop power control state for an SRS which is same as a PUSCH;
a first closed-loop power control state for an SRS which is separate from a PUSCH; or
a second closed-loop power control state for an SRS which is separate from a PUSCH.

In some embodiments, association between the power control adjustment state and the second transmission reception point (TRP) is configured via association between the power control adjustment state and the pathloss estimation offset factor.

In some embodiments, at least a part of power control adjustment states of a sounding reference signal (SRS) is associated with the pathloss estimation offset factor; for a power control adjustment state of the first transmission reception point (TRP), the pathloss estimation offset factor is set to zero; and for a power control adjustment state of the second transmission reception point (TRP), the pathloss estimation offset factor is set to non-zero.

In some embodiments, the pathloss estimation offset factor is configured with a TCI state for a sounding reference signal (SRS), the TCI state including: a joint uplink/downlink TCI state (joint DL/UL TCI state), a separate uplink TCI state (separate UL TCI state) or a separate downlink TCI state (separate DL TCI state).

In some embodiments, the pathloss estimation offset factor is configured with a pathloss reference signal for a sounding reference signal (SRS).

In some embodiments, as shown in FIG. 7, the apparatus may further include:
a transmitting unit 703 configured to transmit a sounding reference signal (SRS), the sounding reference signal (SRS) having predefined power or configured power, and the sounding reference signal (SRS) being used by a network device to calculate the pathloss estimation offset factor.

In some embodiments, the pathloss estimation offset factor is predefined, or is configured with one or more values, and/or, one value for a physical uplink shared channel (PUSCH)/a physical uplink control channel (PUCCH)/a sounding reference signal (SRS) is configured or indicated.

In some embodiments, a plurality of second transmission reception points (TRPs) are configured in the same cell, and a plurality of pathloss estimation offset factors are configured or indicated.

In some embodiments, the pathloss estimation offset factor is applied to closed-loop power control and/or open-loop power control.

In some embodiments, the pathloss estimation offset factor is used for at least one of the following power header room (PHR):
a first type PHR based on an actual PUSCH transmission;
a first type PHR based on a reference PUSCH transmission;
a third type PHR based on an actual SRS transmission; or
a third type PHR based on a reference SRS transmission.

In some embodiments, a third type PHR based on an actual SRS transmission and/or a third type PHR based on a reference SRS transmission is/are associated with a closed-loop power control state for an SRS; wherein the closed-loop power control state for an SRS is at least one of the following:
a first closed-loop power control state for an SRS which is same as a PUSCH;
a second closed-loop power control state for an SRS which is same as a PUSCH;
a first closed-loop power control state for an SRS which is separate from a PUSCH; or
a second closed-loop power control state for an SRS which is separate from a PUSCH.

Or, a third type PHR based on an actual SRS transmission and/or a third type PHR based on a reference SRS transmission is/are associated with a closed-loop power control state for an SRS; wherein the closed-loop power control state for an SRS is at least one of the following:
a first closed-loop power control state for an SRS which is separate from a PUSCH; or
a second closed-loop power control state for an SRS which is separate from a PUSCH.

In some embodiments, in a MAC CE for power header room (PHR) reporting, a power control state for an SRS is indicated.

It should be noted that the above text only describes components or modules related to the present disclosure, however the present disclosure is not limited thereto. The power control apparatus 700 may further include other components or modules. For detailed contents of these components or modules, relevant technologies may be referred to.

Moreover, for simplicity, FIG. 7 only exemplarily shows a connection relationship or signal flow between components or modules, however those skilled in the art should know that various relevant technologies such as bus connection may be used. Each of the above components or modules may be implemented via a hardware facility such as a processor, a memory, a transmitter, a receiver, etc. Embodiments of the present disclosure do not impose limitations thereto.

Through embodiments of the present disclosure, a terminal equipment calculates power of a second uplink transmission according to a pathloss estimation offset factor. Therefore, even in an asymmetric uplink/downlink TRP operation scenario, appropriate power control is able to be performed, which may improve accuracy and reliability of an uplink transmission.

### Embodiments of a fourth aspect

Embodiments of the present disclosure provide a power control apparatus. The apparatus may be a network device, or may be one or more components or assemblies configured in a network device. Contents same as embodiments of the first to third aspects are not further elaborated.

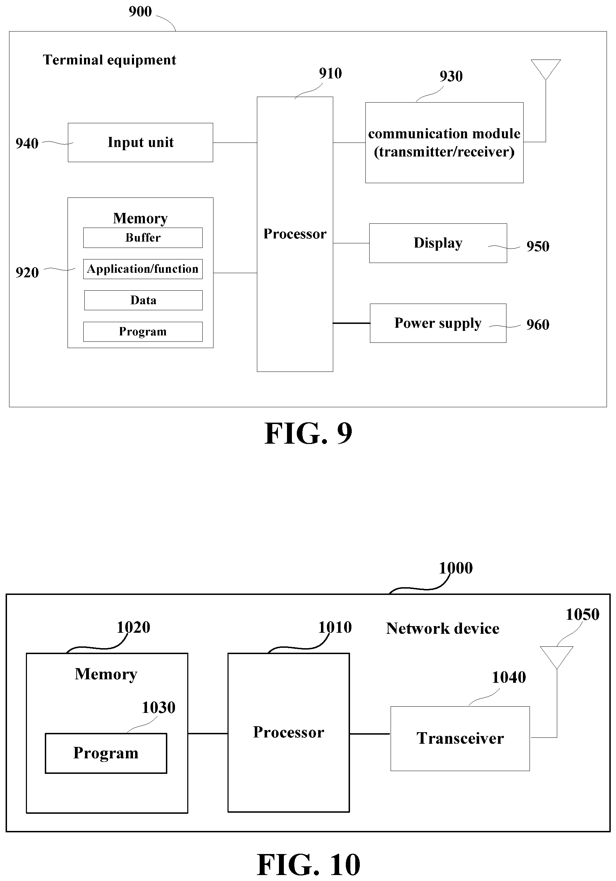

FIG. 8 is a schematic diagram of a power control apparatus in the embodiments of the present disclosure. As shown in FIG. 10, a power control apparatus 800 includes:
a transmitting unit 801 configured to transmit configuration information of an uplink transmission; wherein a terminal equipment performs a first uplink transmission and a first downlink transmission with a first transmission reception point (TRP), and/or, performs a second uplink transmission with a second transmission reception point (TRP); and the terminal equipment calculates power of the second uplink transmission according to a pathloss estimation offset factor.

In some embodiments, as shown in FIG. 8, the apparatus may further include:
a receiving unit 802 configured to receive a sounding reference signal (SRS), the sounding reference signal (SRS) having predefined power or configured power, and the sounding reference signal (SRS) being used by a network device to calculate the pathloss estimation offset factor.

It should be noted that the above text only describes components or modules related to the present disclosure, however the present disclosure is not limited thereto. The power control apparatus 800 may further include other components or modules. For detailed contents of these components or modules, relevant technologies may be referred to.

Moreover, for simplicity, FIG. 8 only exemplarily shows a connection relationship or signal flow between components or modules, however those skilled in the art should know that various relevant technologies such as bus connection may be used. Each of the above components or modules may be implemented via a hardware facility such as a processor, a memory, a transmitter, a receiver, etc. Embodiments of the present disclosure do not impose limitations thereto.

Through embodiments of the present disclosure, a terminal equipment calculates power of a second uplink transmission according to a pathloss estimation offset factor. Therefore, even in an asymmetric uplink/downlink TRP operation scenario, appropriate power control is able to be performed, which may improve accuracy and reliability of an uplink transmission.

### Embodiments of a fifth aspect

Embodiments of the present disclosure further provide a communication system, FIG.1 may be referred to, contents same as those in embodiments of the first to fourth aspects are not further elaborated.

In some embodiments, a communication system 100 at least may include:
a network device configured to transmit configuration information of an uplink transmission; and
a terminal equipment configured to perform a first uplink transmission and a first downlink transmission with a first transmission reception point (TRP), and/or, perform a second uplink transmission with a second transmission reception point (TRP); and the terminal equipment calculates power of the second uplink transmission according to a pathloss estimation offset factor.

Embodiments of the present disclosure further provide a terminal equipment, but the present disclosure is not limited thereto, it may further be other device.

FIG. 9 is a schematic diagram of a terminal equipment in the embodiments of the present disclosure. As shown in FIG. 9, the terminal equipment 900 may include a processor 910 and a memory 920; the memory 920 stores data and programs, and is coupled to the processor 910. It should be noted that this figure is exemplary, other types of structures may also be used to supplement or replace this structure, to implement a telecommunication function or other functions.

For example, the processor 910 may be configured to execute a program to implement the power control method as described in embodiments of the first aspect. For example, the processor 910 may be configured to perform the following control: receiving configuration information of an uplink transmission; wherein a terminal equipment performs a first uplink transmission and a first downlink transmission with a first transmission reception point (TRP), and/or, performs a second uplink transmission with a second transmission reception point (TRP); and calculating power of the second uplink transmission according to a pathloss estimation offset factor.

As shown in FIG. 9, the terminal equipment 900 may further include: a communication module 930, an input unit 940, a display 950, and a power source 960. Functions of the above components are similar to related arts, and are not further elaborated here. It should be noted that the terminal equipment 900 does not have to include all components shown in FIG. 9, said components are not indispensable. Moreover, the terminal equipment 900 may further include components not shown in FIG. 9, related arts may be referred to.

Embodiments of the present disclosure further provide a network device, for example it may be a base station, but the present disclosure is not limited thereto, or it may further be other network device.

FIG. 10 is a composition schematic diagram of a network device in the embodiments of the present disclosure. As shown in FIG. 10, a network device 1000 may include: a processor 1010 (such as a central processing unit (CPU)) and a memory 1020; the memory 1020 is coupled to the processor 1010. The memory 1020 may store various data; moreover, further stores a program 1030 for information processing, and executes the program 1030 under the control of the processor 1010.

For example, the processor 1010 may be configured to execute a program to implement the power control method as described in embodiments of the second aspect. For example, the processor 1010 may be configured to perform the following control: transmitting configuration information of an uplink transmission; wherein a terminal equipment performs a first uplink transmission and a first downlink transmission with a first transmission reception point (TRP), and/or, performs a second uplink transmission with a second transmission reception point (TRP); and the terminal equipment calculates power of the second uplink transmission according to a pathloss estimation offset factor.

In addition, as shown in FIG. 10, the network device 1000 may further include a transceiver 1040 and an antenna 1050, etc., wherein functions of said components are similar to related arts and are not further elaborated here. It should be noted that the network device 1000 does not have to include all components shown in FIG. 10. Moreover, the network device 1000 may further include components not shown in FIG. 10, related arts may be referred to.

Embodiments of the present disclosure further provide a computer program, wherein when a terminal equipment executes the program, the program enables the terminal equipment to execute the power control method described in embodiments of the first aspect.

Embodiments of the present disclosure further provide a storage medium in which a computer program is stored, wherein the computer program enables a terminal equipment to execute the power control method described in embodiments of the first aspect.

Embodiments of the present disclosure further provide a computer program, wherein when a network device executes the program, the program enables the network device to execute the power control method described in embodiments of the second aspect.

Embodiments of the present disclosure further provide a storage medium in which a computer program is stored, wherein the computer program enables a network device to execute the power control method described in embodiments of the second aspect.

Apparatuses and methods in the present disclosure may be implemented by hardware, or may be implemented by combining hardware with software. The present disclosure relates to such a computer readable program that when the program is executed by a logic component, the logic component is able to implement apparatuses described in the above text or a constituent component, or the logic component is able to implement various methods or steps described in the above text. The present disclosure further relates to a storage medium storing the above programs, such as a hard disk, a magnetic disk, an optical disk, a DVD, a flash memory and the like.

Methods/apparatuses described by combining with embodiments of the present disclosure may be directly embodied as hardware, a software module executed by a processor, or a combination of the two. For example, one or more of functional block diagrams shown in drawings or one or more combinations of functional block diagrams may correspond to software modules of a computer program process, or may correspond to hardware modules. These software modules may respectively correspond to steps shown in drawings. These hardware modules may be implemented by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM, or any other form of storage medium known in the art. A storage medium may be coupled to a processor, thus enabling the processor to read information from the storage medium and write information into the storage medium, or the storage medium may be a constituent part of a processor. A processor and a storage medium may be located in an ASIC. The software module may be stored in a memory of a mobile terminal, or may be stored in a memory card that may be inserted into a mobile terminal. For example, if a device (e.g., a mobile terminal) adopts a MEGA-SIM card with a larger capacity or a flash memory apparatus with a large capacity, the software module may be stored in the MEGA-SIM card, or in the flash memory apparatus with a large capacity.

One or more of functional block diagrams described in drawings or one or more combinations of functional block diagrams may be implemented as a general-purpose processor for performing functions described in the present disclosure, a digital signal processor (DSP), an application-specific integrated circuit (ASIC), a field-programmable gate array (FPGA) or other programmable logic device, a discrete gate or a transistor logic device, a discrete hardware component, or any appropriate combination thereof. One or more of functional block diagrams described in drawings or one or more combinations of functional block diagrams may further be implemented as a combination of computing devices, such as a combination of a DSP and a microprocessor, a plurality of microprocessors, one or more microprocessors combined and communicating with a DSP, or any other such configuration.

The present disclosure is described above by combining with specific implementations, however persons skilled in the art should clearly know that these descriptions are exemplary and do not limit protection scopes of the present disclosure. Persons skilled in the art may make various variations and amendments to the present disclosure according to spirits and principles of the present disclosure, these variations and amendments are also within scopes of the present disclosure.

As for implementations including the above embodiments, the following supplements are further disclosed:
1. A power control method, including that:
   a terminal equipment receives configuration information of an uplink transmission; wherein the terminal equipment performs a first uplink transmission and a first downlink transmission with a first transmission reception point (TRP), and/or, performs a second uplink transmission with a second transmission reception point (TRP); and
   the terminal equipment calculates power of the second uplink transmission according to a pathloss estimation offset factor.
2. A power control method, including that:
   a network device transmits configuration information of an uplink transmission; wherein a terminal equipment performs a first uplink transmission and a first downlink transmission with a first transmission reception point (TRP), and/or, performs a second uplink transmission with a second transmission reception point (TRP); and the terminal equipment calculates power of the second uplink transmission according to a pathloss estimation offset factor.
3. A terminal equipment, including a memory configured to store a computer program, and a processor configured to execute the computer program to implement the power control method according to supplement 1.
4. A network device, including a memory configured to store a computer program, and a processor configured to execute the computer program to implement the power control method according to supplement 2.
5. A computer program product, at least including a computer program, wherein the computer program, when executed by a processor, enables a terminal equipment to perform the power control method according to supplement 1.
6. A computer program product, at least including a computer program, wherein the computer program, when executed by a processor, enables a network device to perform the power control method according to supplement 2.

## Claims

1. A power control apparatus, comprising:
a receiving unit configured to receive configuration information of an uplink transmission; wherein a terminal equipment performs a first uplink transmission and a first downlink transmission with a first transmission reception point (TRP), and/or, performs a second uplink transmission with a second transmission reception point (TRP); and
a processing unit configured to calculate power of the second uplink transmission according to a pathloss estimation offset factor.

2. The apparatus according to claim 1, wherein the pathloss estimation offset factor is for at least one of the following channels or signals: a physical uplink shared channel (PUSCH), a physical uplink control channel (PUCCH), a physical random access channel (PRACH), or a sounding reference signal (SRS).

3. The apparatus according to claim 1, wherein for different bandwidth parts (BWPs) or carriers or serving cells, pathloss estimation offset factors for a physical uplink shared channel (PUSCH) are the same, or pathloss estimation offset factors for a physical uplink shared channel (PUSCH) are different;
and/or, for different pathloss reference signals, pathloss estimation offset factors for a physical uplink shared channel (PUSCH) are the same, or pathloss estimation offset factors for a physical uplink shared channel (PUSCH) are different;
and/or, for different physical uplink shared channel (PUSCH) power control adjustment states, pathloss estimation offset factors for a physical uplink shared channel (PUSCH) are the same, or pathloss estimation offset factors for a physical uplink shared channel (PUSCH) are different;
and/or, for different physical uplink shared channel (PUSCH) transmission occasions, pathloss estimation offset factors for a physical uplink shared channel (PUSCH) are the same, or pathloss estimation offset factors for a physical uplink shared channel (PUSCH) are different;
and/or, for different parameter set configurations, pathloss estimation offset factors for a physical uplink shared channel (PUSCH) are the same, or pathloss estimation offset factors for a physical uplink shared channel (PUSCH) are different.

4. The apparatus according to claim 1, wherein for different bandwidth parts (BWPs) or carriers or serving cells, pathloss estimation offset factors for a physical uplink control channel (PUCCH) are the same, or pathloss estimation offset factors for a physical uplink control channel (PUCCH) are different;
and/or, for different pathloss reference signals, pathloss estimation offset factors for a physical uplink control channel (PUCCH) are the same, or pathloss estimation offset factors for a physical uplink control channel (PUCCH) are different;
and/or, for different physical uplink control channel (PUCCH) power control adjustment states, pathloss estimation offset factors for a physical uplink control channel (PUCCH) are the same, or pathloss estimation offset factors for a physical uplink control channel (PUCCH) are different;
and/or, for different physical uplink control channel (PUCCH) transmission occasions, pathloss estimation offset factors for a physical uplink control channel (PUCCH) are the same, or pathloss estimation offset factors for a physical uplink control channel (PUCCH) are different.

5. The apparatus according to claim 1, wherein for different bandwidth parts (BWPs) or carriers or serving cells, pathloss estimation offset factors for a sounding reference signal (SRS) are the same, or pathloss estimation offset factors for a sounding reference signal (SRS) are different;
and/or, for different pathloss reference signals, pathloss estimation offset factors for a sounding reference signal (SRS) are the same, or pathloss estimation offset factors for a sounding reference signal (SRS) are different;
and/or, for different sounding reference signal (SRS) power control adjustment states, pathloss estimation offset factors for a sounding reference signal (SRS) are the same, or pathloss estimation offset factors for a sounding reference signal (SRS) are different;
and/or, for different sounding reference signal (SRS) transmission occasions, pathloss estimation offset factors for a sounding reference signal (SRS) are the same, or pathloss estimation offset factors for a sounding reference signal (SRS) are different.

6. The apparatus according to claim 1, wherein for a physical uplink shared channel (PUSCH) or a physical uplink control channel (PUCCH), one power control adjustment state is associated with the second transmission reception point (TRP);
wherein the power control adjustment state associated with the second transmission reception point (TRP) is predefined, or is configured via RRC, or is indicated via a MAC CE and/or DCI.

7. The apparatus according to claim 6, wherein association between the power control adjustment state and the second transmission reception point (TRP) is configured via association between the power control adjustment state and the pathloss estimation offset factor;
and/or
a power control adjustment state of a physical uplink shared channel (PUSCH) and/or a power control adjustment state of a physical uplink control channel (PUCCH) is/are associated with the pathloss estimation offset factor; for a power control adjustment state of the first transmission reception point (TRP), the pathloss estimation offset factor is set to zero; and for a power control adjustment state of the second transmission reception point (TRP), the pathloss estimation offset factor is set to non-zero.

8. The apparatus according to claim 6, wherein the pathloss estimation offset factor is configured with a TCI state for a physical uplink shared channel (PUSCH) and/or a physical uplink control channel (PUCCH), the TCI state comprising: a joint uplink/downlink TCI state, a separate uplink TCI state or a separate downlink TCI state;
or, the pathloss estimation offset factor is configured with a pathloss reference signal for a physical uplink shared channel (PUSCH) and/or a physical uplink control channel (PUCCH).

9. The apparatus according to claim 1, wherein for a sounding reference signal (SRS), one power control adjustment state is associated with the second transmission reception point (TRP);
wherein the power control adjustment state associated with the second transmission reception point (TRP) is predefined, or is configured via RRC, or is indicated via a MAC CE and/or DCI.

10. The apparatus according to claim 9, wherein a power control adjustment state associated with the second transmission reception point (TRP) comprises at least one of the following:
a first closed-loop power control state for an SRS which is same as PUSCH;
a second closed-loop power control state for an SRS which is same as PUSCH;
a first closed-loop power control state for an SRS which is separate from PUSCH; or
a second closed-loop power control state for an SRS which is separate from PUSCH.

11. The apparatus according to claim 9, wherein association between the power control adjustment state and the second transmission reception point (TRP) is configured via association between the power control adjustment state and the pathloss estimation offset factor;
and/or
at least a part of power control adjustment states of a sounding reference signal (SRS) is associated with the pathloss estimation offset factor; for a power control adjustment state of the first transmission reception point (TRP), the pathloss estimation offset factor is set to zero; and for a power control adjustment state of the second transmission reception point (TRP), the pathloss estimation offset factor is set to non-zero.

12. The apparatus according to claim 9, wherein the pathloss estimation offset factor is configured with a TCI state for a sounding reference signal (SRS), the TCI state comprising: a joint uplink/downlink TCI state, a separate uplink TCI state, or a separate downlink TCI state;
or, the pathloss estimation offset factor is configured with a pathloss reference signal for a sounding reference signal (SRS).

13. The apparatus according to claim 1, wherein the apparatus further comprises:
a transmitting unit configured to transmit a sounding reference signal (SRS), the sounding reference signal (SRS) having predefined power or configured power, and the sounding reference signal (SRS) being used by a network device to calculate the pathloss estimation offset factor.

14. The apparatus according to claim 1, wherein the pathloss estimation offset factor is predefined or is configured with one or more values, and/or, one value for a physical uplink shared channel (PUSCH)/a physical uplink control channel (PUCCH)/a sounding reference signal (SRS) is configured or indicated.

15. The apparatus according to claim 1, wherein a plurality of second transmission reception points (TRPs) are configured in the same cell, and a plurality of pathloss estimation offset factors are configured or indicated;
the pathloss estimation offset factor is applied to closed-loop power control and/or open-loop power control.

16. The apparatus according to claim 1, wherein the pathloss estimation offset factor is used for at least one of the following power header room (PHR):
a first type PHR based on an actual PUSCH transmission;
a first type PHR based on a reference PUSCH transmission;
a third type PHR based on an actual SRS transmission; or
a third type PHR based on a reference SRS transmission.

17. The apparatus according to claim 1, wherein
a third type PHR based on an actual SRS transmission and/or a third type PHR based on a reference SRS transmission is/are associated with a closed-loop power control state for an SRS; wherein the closed-loop power control state for an SRS is at least one of the following:
a first closed-loop power control state for an SRS which is same as PUSCH;
a second closed-loop power control state for an SRS which is same as PUSCH;
a first closed-loop power control state for an SRS which is separate from PUSCH; or
a second closed-loop power control state for an SRS which is separate from PUSCH;
or,
a third type PHR based on an actual SRS transmission and/or a third type PHR based on a reference SRS transmission is/are associated with a closed-loop power control state for an SRS; wherein the closed-loop power control state for an SRS is at least one of the following:
a first closed-loop power control state for an SRS which is separate from PUSCH; or
a second closed-loop power control state for an SRS which is separate from PUSCH.

18. The apparatus according to claim 1, wherein in a MAC CE for power header room (PHR) reporting, a power control state for an SRS is indicated.

19. A power control apparatus, comprising:
a transmitting unit configured to transmit configuration information of an uplink transmission; wherein a terminal equipment performs a first uplink transmission and a first downlink transmission with a first transmission reception point (TRP), and/or, performs a second uplink transmission with a second transmission reception point (TRP), and the terminal equipment calculates power of the second uplink transmission according to a pathloss estimation offset factor.

20. A communication system, comprising:
a network device configured to transmit configuration information of an uplink transmission; and
a terminal equipment configured to perform a first uplink transmission and a first downlink transmission with a first transmission reception point (TRP), and/or, perform a second uplink transmission with a second transmission reception point (TRP), and the terminal equipment calculates power of the second uplink transmission according to a pathloss estimation offset factor.
